# EUROPÄISCHE PATENTSCHRIFT

(11) **EP 3 307 645 B1**
(45) Veröffentlichungstag und Bekanntmachung des Hinweises auf die Patenterteilung: **24.07.2019**
(21) Anmeldenummer: 16738861.0
(22) Anmeldetag: 10.06.2016
(51) Int. Cl.: B65D 81/20, B65B 31/04

(54) **VORRICHTUNG ZUM KONSERVIEREN VON GETRÄNKEN**
DEVICE FOR PRESERVING BEVERAGES
DISPOSITIF DE CONSERVATION DE BOISSONS

(30) Priorität: 11.06.2015 AT 3672015
(43) Veröffentlichungstag der Anmeldung: 18.04.2018
(73) Patentinhaber: Innveri AG, 3280 Murten (CH)
(72) Erfinder: JÜNI, Manfred, 3212 Kleingurmels (CH)
(74) Vertreter: Keschmann, Marc
(86) Internationale Anmeldenummer: PCT/IB2016/000787
(87) Internationale Veröffentlichungsnummer: WO 2016/198941

(56) Entgegenhaltungen:
- WO-A2-2009/147506
- FR-A1- 2 588 531
- US-A- 3 084 823
- US-A- 4 475 576
- US-A- 4 640 426
- US-A1- 2010 327 010

## Beschreibung

Die Erfindung betrifft ein Verschlusselement für Flüssigkeitsbehälter, insbesondere Flaschen, umfassend einen in die Halsöffnung des Flüssigkeitsbehälters greifenden Stopfen und eine den Rand der Halsöffnung überdeckende Kappe, wobei der Stopfen einen diesen durchsetzenden Einlasskanal und einen Auslasskanal aufweist, wobei der Einlasskanal und der Auslasskanal mit einem Einlass- bzw. Auslassventil versehen ist, das als Überdruckventil ausgebildet ist.

Die Erfindung betrifft weiters eine Vorrichtung zum Konservieren von Flüssigkeiten im Haushalt mit Hilfe eines Schutzgases, umfassend wenigstens ein mit einem Gasvorratsbehälter verbindbares oder diesen aufweisendes Handgerät, das ein eigenes, das Schutzgas wahlweise freigebendes oder zurückhaltendes Ventil aufweist, um die Abgabe des Schutzgases aus einem abgabeseitigen Ende des Handgeräts freizugeben oder zurückzuhalten.

Im Zusammenhang mit dem Konservieren von Lebensmitteln mit Hilfe eines Schutzgases wird in der Fachwelt von MAP - Verpacken gesprochen (Modified Atmosphere Packaging = MAP).

Als Behälter ist im Rahmen der Erfindung jegliches Behältnis zu verstehen, das zur Aufnahme von Flüssigkeiten dient, wie z.B. Flaschen, Gläser, Kanister, und dgl.

Eine Vorrichtung zum Konservieren von Lebensmitteln ist beispielsweise der EP 1145640 A1 zu entnehmen. Sie dient dazu, den Rauminhalt des gasdicht verschlossenen Lebensmittelsbehälters mit einem Inertgas, und insbesondere beispielsweise Kohlendioxid (CO₂), zu füllen, wobei gleichzeitig die in dem Behälter vorhandene Luft entweichen muss. Während dieses Spülvorgangs wird Inertgas über ein Einlassventil eingefüllt, wobei gleichzeitig Luft über ein gesondertes Auslassventil austritt. Die in dem Lebensmittelbehälter gelagerten Lebensmittel befinden sich nach dem Spülvorgang in einer Schutzatmosphäre, sodass die Haltbarkeit entscheidend verbessert wird.

Im Stand der Technik (z.B. WO 2009/147506 A2) werden speziell eingerichtete, insbesondere mit Ein- und Auslassventil versehene Lebensmittelbehälter bereitgestellt, um das MAP-Verpacken zu ermöglichen. Das Lagern von Lebensmitteln in gesondert dafür eingerichteten Behältern hat sich in der Praxis bewährt. Im Falle der Aufbewahrung von Flüssigkeiten ist es hingegen nicht unbedingt praktikabel, die Flüssigkeit in einen gesonderten Behälter umzuleeren, um die MAP-Technologie nützen zu können. Insbesondere im Fall von Getränken, wie z.B. Wein, Sekt oder Champagner, ist es wünschenswert die Schutzgaskonservierung in der Originalflasche vorzunehmen

Aus der US 4475576 A ist ein Stopfen für Flaschen gemäß dem Oberbegriff des vorliegenden Anspruchs 1, der einen Einlasskanal und einen Auslasskanal aufweist, bekannt.

Die US 4640426 A offenbart einen Flaschenstopfen, der Leitungen aufweist, die jeweils mit einem Druckbegrenzungsventil ausgestattet sind.

Die US 3084823 A offenbart einen Stopfen, der mit einem Lippenventil ausgestattet ist.

Die Erfindung zielt daher darauf ab, das MAP-Verpacken gezielt für Flüssigkeiten in Behältern im Haushalt und in der Gastronomie zu ermöglich und die entsprechenden Bestandteile eines Gesamtkonzepts bereitzustellen, so dass es dem Endverbraucher ohne großen Aufwand möglich ist, die Frische und Qualität der Flüssigkeiten zu erhalten. Nach jedem Öffnen des Behälters soll er diesen nach dem Wiederverschließen kurz und einfach mit Schutzgas spülen oder versehen können und somit die Flüssigkeit in einer optimalen Atmosphäre und/oder unter Überdruck aufbewahren können.

Zur Lösung dieser Aufgabe sieht die Erfindung einen Behälterverschluss vor, mit dem der Getränkebehälter, insbesondere die Flasche verschlossen werden kann und der mit den erforderlichen Kanälen und Ventilen ausgestattet ist, um ein Befüllen und/oder Spülen des Behälters mit Schutzgas zu ermöglichen. Der erfindungsgemäße Verschluss umfasst einen in die Halsöffnung des Flüssigkeitsbehälters greifenden Stopfen und eine den Rand der Halsöffnung überdeckende Kappe, wobei der Stopfen einen diesen durchsetzender Einlasskanal und einen Auslasskanal aufweist, wobei der Einlasskanal und der Auslasskanal mit einem Einlass- bzw. Auslassventil versehen ist, das als Überdruckventil ausgebildet ist, wobei der Stopfen einen Stopfengrundkörper aus einem Elastomer umfasst, der an seinem Außenumfang wenigstens eine Dichtlippe aufweist und der ein durch den anliegenden Überdruck auslenkbaren Dichtkörper des Einlassventils ausbildet. Der Stopfen- und der Kappenabschnitt des Verschlusses sind hierbei zu einem gemeinsamen Verschlussteil miteinander verbunden bzw. einstückig ausgebildet. Der Verschluss erlaubt ein Befüllen und/oder Spülen des Behälters mit Schutzgas im geschlossenen Zustand. Über den Einlasskanal und das Einlassventil kann Schutzgas durch den Verschluss hindurch in das Behälterinnere geleitet werden, wobei das Einlassventil als Überdruckventil ausgebildet ist, sodass das Einlassventil selbsttätig öffnet, sobald das von einer Schutzgasquelle zugeführte Schutzgas mit einem ausreichend hohen Gasdruck ansteht. Nach Beendigung des Befüll- bzw. Spülvorgangs schließt sich das Einlassventil selbsttätig. Für den Austritt der sich im Behälter befindlichen Luft und ggf. des Schutzgases aus dem Behälter kann ein vom Einlasskanal gesonderter Auslasskanal mit einem Auslassventil vorgesehen sein, das ebenfalls als Überdruckventil ausgebildet ist. Der Gasaustritt aus dem Behälter erfolgt, sobald der Gasdruck im Behälter einen vorgegebenen Grenzwert überschreitet. Auf das Vorsehen eines Auslasskanals samt Auslassventils kann aber auch verzichtet werden, wenn kein Spülvorgang, sondern lediglich ein Befüllen mit Schutzgas gewünscht ist.

Mit dem erfindungsgemäßen Behälterverschluss sind folgende Betriebsvarianten denkbar:
a) "Spülen und Überdruck": Die Luft im Behälter wird ganz oder teilweise durch die Schutzatmosphäre ausgetauscht, wobei die Einbringung des Schutzgases bis zu Erreichung eines definierten Überdrucks im Behälter fortgesetzt wird. Diese Variante wird in der Regel bei allen Formen von Flüssigkeiten eingesetzt, welche vor Oxidation geschützt werden müssen und bei welchen je nach Anwendungsgebiet zudem das Ausperlen der Kohlensäure vermieden werden soll. Der Behälter soll dabei eine ausreichend niedrige Durchlässigkeit für Sauerstoff/Gas aufweisen, somit starke Barriereeigenschaften aufweisen, da andernfalls zu viel Gas austreten kann. Generell sollte im Falle von kohlesäurehaltigen Flüssigkeiten ein Überdruck von 1-4 bar im Behälter herrschen und zur Verhinderung der Oxidation ein Restsauerstoffgehalt von 1 bis 2 % nicht überschritten werden. Um sowohl ein Spülen als auch einen Überdruck zu ermöglichen, ist der erfindungsgemäße Verschluss zusätzlich zum Einlasskanal mit einem Auslasskanal versehen, wobei das Einlass- und das Auslassventil so aufeinander abgestimmt sind, dass das Einlassventil bei einem niedrigeren Überdruck öffnet als das Auslassventil. Dadurch ist sichergestellt, dass zuerst das Einlassventil geöffnet wird und danach ein kontinuierlicher Druckaufbau im Behälterinneren erfolgt bis der Öffnungsdruck des Ausgangsventils erreicht wird. Bei Erreichen des Öffnungsdrucks des Ausgangsventils entweicht Gas aus dem Inneren des Behälters, bis der gewünschte Grad des Gasaustausches bzw. Spülens erreicht wird. Danach wird die Zufuhr des Schutzgases reduziert oder gleich unterbrochen, sodass sich auch das Einlassventil schließt. Aufgrund der unterschiedlichen Öffnungsdruckwerte des Einlass- und des Auslassventils verbleibt nach der Beendigung der Gaszufuhr ein Überdruck im Behälterinneren.
b) "Spülen": Die Luft im Behälter wird ganz oder teilweise durch die Schutzatmosphäre ersetzt. Dies wird in der Regel bei allen Formen von Flüssigkeiten eingesetzt, welche vor Oxidation geschützt werden müssen und bei welchen der Behälter eine ausreichend niedrige Durchlässigkeit für Sauerstoff/Gas aufweist, da andernfalls zu viel Gas austreten kann. Generell sollte der Restsauerstoffgehalt in solchen Behältern unter 1 bis 2 % liegen. Bei höheren Sauerstoffwerten kann MAP in Bezug auf den Oxidationsschutz nicht optimal eingesetzt werden. Die beschriebene Verfahrensweise erfordert einen Verschluss, der sowohl einen Einlass- als auch einen Auslasskanal aufweist. Der Öffnungsdruck des Auslassventils ist hierbei gleich oder kleiner gewählt als der des Einlassventils. Alternativ kann auf ein Auslassventil auch gänzlich verzichtet werden, sodass die im Behälter vorhandene Luft ungehindert austreten kann und nach Beendigung des Spülvorgangs im Wesentlichen kein Überdruck im Behälter verbleibt.

Entscheidend bei beiden Varianten ist, dass das Einlassven-til und das Auslassventil durch den jeweiligen Gasdruck geöffnet werden, sodass es keiner manuellen Betätigung bedarf und die Konstruktion entsprechend einfach und platzsparend getroffen werden kann.

Gemäß einer bevorzugten Ausführung ist vorgesehen, dass das Einlass- und das Auslassventil unabhängig voneinander betätigbar sind.

Um eine möglichst kleinbauende Ausführung zu schaffen, bei welcher die Anordnung des Einlasskanals und des Einlassventils und ggf. auch des Auslasskanals und des Auslassventils innerhalb des Querschnitts der Behälteröffnung, insbesondere im Flaschenhals gelingt, ist es vorteilhaft, den Verschluss aus einer möglichst geringen Anzahl an Bauteilen zusammenzusetzen. Erfindungsgemäß ist vorgesehen, dass der Stopfen einen Stopfengrundkörper aus einem Elastomer umfasst, der an seinem. Außenumfang wenigstens eine Dichtlippe aufweist und der den durch den anliegenden Überdruck auslenkbaren Dichtkörper des Einlassventils ausbildet. Der Stopfengrundkörper gewährleistet somit nicht nur die Funktion der äußeren Abdichtung gegenüber der Behälteröffnung, insbesondere dem Flaschenhals, mit Hilfe der Dichtlippe, sondern bildet gleichzeitig auch den Dichtkörper des Einlassventils aus. Bevorzugt ist der Dichtkörper hierbei als durch den anliegenden Überdruck radial aufweitbare Hülse ausgebildet. Insbesondere umgibt der hülsenförmige Dichtkörper einen Dorn, an dessen Umfangsfläche wenigstens eine Bohrung des Einlasskanals mündet. Sobald der in der Bohrung anstehende Gasdruck einen bestimmten Grenzwert überschreitet, wird die elastomere Dichthülse radial aufgeweitet, verlässt zumindest lokal ihre an den Dorn anliegende Position und gibt dadurch die Bohrungsmündung frei, sodass das Gas zwischen der Dornaußenoberfläche und der Innenoberfläche des Dichtköpers hindurchfließen kann.

Bevorzugt weist der elastomere Stopfengrundkörper einen vom Stopfen ausgehenden ringförmigen flanschartigen Fortsatz auf, der den Rand der Behälteröffnung überdeckt und damit einen Teil der Kappe ausbildet. Bevorzugt ist in diesem Zusammenhang vorgesehen, dass der Einlasskanal exzentrisch in die Behälteröffnung, insbesondere den Flaschenhals mündet. Durch eine derartige Geometrie des Verschlusssystems wird innerhalb des Behälters eine Luftströmung so erzeugt, dass das eingebrachte Schutzgas die in dem Behälter vorhandene Luft verdrängt und damit sicherstellt, dass das eingebrachte Schutzgas aufgrund der in vorteilhafter Weise erzeugten zirkulären Strömung im Inneren des Behälters in kurzer Zeit den gesamten Rauminhalt ausfüllt, ohne dass hierbei eine zu große Menge des Schutzgases durch Ausströmen wiederum verloren geht.

In bevorzugter Weise ist die Ausbildung hierbei derart weitergebildet, dass das Einlassventil radial versetzt zum Auslassventil angeordnet ist und der Gasstrom beim Einlassventil so geführt wird, dass im Behälter die gewünschte zirkulare Strömung entsteht.

Mit Vorteil weist die Kappe eine im Wesentlichen zentrische, mit dem Einlasskanal in Verbindung stehende Einlassöffnung zum Ansetzen oder Anschließen einer Schutzgasquelle auf. Die Einlassöffnung ist dabei so ausgebildet, dass das abgabeseitige Ende eines Handgeräts zur Abgabe des Schutzgases angesetzt werden kann.

Damit das Handgerät in der an die Einlassöffnung des Verschlusses angesetzten Position den Austritt von aus dem Behälterinneren austretenden Gas nicht behindert, ist bevorzugt vorgesehen, dass die Kappe eine radial außerhalb der Einlassöffnung angeordnete, bevorzugt ringförmige Auslassöffnung aufweist, die mit dem Auslasskanal in Verbindung steht. Das Gas tritt somit radial außerhalb des Handgeräts aus. Um dabei zu verhindern, dass die ggf. mit dem austretenden Gas mitgerissene Flüssigkeit dem Benutzer entgegenspritzt, sieht eine bevorzugte Weiterbildung vor, dass der Auslasskanal über wenigstens eine radiale Bohrung in eine Auslasskammer mündet, die über die Auslassöffnung mit der Umgebung in Verbindung steht. Das Gas samt der ggf. mitgerissenen Flüssigkeit gelangt somit zunächst in radialer Richtung in eine im Öffnungsbereich angeordnete Auslasskammer, wo allfällige Flüssigkeit abgebremst wird und sich sammeln kann und von wo das ebenfalls abgebremste Gas den Verschluss schließlich über die Auslassöffnung axial verlassen kann.

In konstruktiver Hinsicht ergibt sich eine vorteilhafte Ausbildung mit möglichst wenig Teilen, wenn die Einlass- und ggf. die Auslassöffnung in einem Kappengrundkörper ausgebildet sind, der mit dem Stopfen, insbesondere dem Stopfengrundkörper verbunden, insbesondere in diesen gesteckt ist.

Weiters kann hierbei vorgesehen sein, dass wenigstens ein Abschnitt des Auslasskanals in einem in eine Ausnehmung des Stopfens, insbesondere des Stopfengrundkörpers, eingesetzten, insbesondere eingesteckten Einsatzteil ausgebildet ist. Der Einsatzteil bildet bevorzugt den vorragenden Endabschnitt des Einlasskanals aus.

Um bei gewissen Anwendungsgebieten, wie z.B. der Konservierung von kohlensäurehaltigen Flüssigkeiten wie Champagner dem erzeugten Überdruck im Behälter Rechnung zu tragen, kann der Verschluss mit Rückhaltebügeln ausgestattet sein. Somit wird das Verschlusssystem auf dem Behälter fixiert und hält dem Überdruck stand. Insbesondere ist hierbei vorgesehen, dass an der Kappe zwei Haltebügel schwenkbar befestigt sind.

Nebst dem Verschlusssystem soll mit der Erfindung unter anderem ein einfaches, handliches und mobiles Handgerät geschaffen werden, das sich durch eine einfache Bedienbarkeit auszeichnet und das den Anforderungen im Haushalt gerecht wird. Das Handgerät kann für eine Mehrzahl von Einsatzvorgängen ausgelegt sein, ohne dass ein ständiges Auswechseln von Gaskartuschen oder dgl. notwendig ist. Zudem kann das Handgerät die benötigte Menge der Schutzatmosphäre definieren. Des Weiteren sollen sicherheitstechnische Probleme im Zusammenhang mit der Lagerung und Anwendung von Gas unter hohem Druck vermieden werden.

Herkömmliche Vorrichtungen können dahingehend verbessert werden, dass der bauliche Aufwand insbesondere für das Handgerät verringert wird sowie die Kombination aus einem multifunktionalen Verschlusssystem und der MAP-Technologie die Konservierung von Flüssigkeiten deutlich vereinfacht und sicherer gestaltet.

Zur Lösung dieser Aufgabe sieht die Erfindung eine Vorrichtung zum Konservieren von Flüssigkeiten im Haushalt mit Hilfe eines Schutzgases vor, umfassend wenigstens ein mit einem Gasvorratsbehälter verbindbares oder dieses aufweisendes Handgerät, das ein eigenes, das Schutzgas wahlweise freigebendes oder zurückhaltendes Ventil aufweist, um die Abgabe des Schutzgases aus einem abgabeseitigen Ende des Handgeräts freizugeben oder zurückzuhalten, und weiters umfassend einen erfindungsgemäßen Behälterverschluss wie beansprucht bzw. oben beschrieben.

Das Handgerät besteht dabei bevorzugt aus einem Gehäuse mit integriertem Gasvorratsbehälter, wobei der Gasvorratsbehälter in dem Gehäuse bevorzugt in auswechselbarer Weise aufgenommen ist. Dadurch können Gasvorratsbehälter mit unterschiedlichen Gasen oder Gasmischungen zum Einsatz gelangen. Als Gasvorratsbehälter kommen beispielsweise Gaskartuschen zum Einsatz, insbesondere sogenannte Kleinkartuschen mit einem Volumen von z.B. 10-40ml. Im Handgerät kann ein Aufstechdorn montiert sein, welcher den eingesetzten Gasvorratsbehälter aktiviert. Die Steuerung der gewünschten Entnahmemenge des Schutzgases bei der Interaktion mit dem Behälterverschlusssystem kann durch ein eingebautes Ventil erfolgen, das über ein Betätigungsglied geöffnet wird. In Strömungsrichtung nach dem Ventil kann eine Düse vorgesehen sein, insbesondere eine solche mit sich in Strömungsrichtung verringerndem Strömungsquerschnitt. Die Ausbildung ist in diesem Zusammenhang bevorzugt dahingehend weitergebildet, dass das Ventil des Handgeräts ein Betätigungsglied aufweist, das als gegen die Kraft einer Feder verschiebbares Ventilglied ausgebildet ist oder mit diesem zusammenwirkt.

Das Handgerät ermöglicht es somit, das Schutzgas über den erfindungsgemäßen Behälterverschluss einem Behälter zuzuführen ohne dabei an ein fixes Standgerät gekoppelt zu sein. Die Betätigung des integrierten Handgeräteventils kann dabei mit Hilfe eines Betätigungsknopfes erfolgen oder aber auch auf Grund des Ansetzens des Handgerätes auf den Behälterverschluss, wodurch das Betätigungsglied des Handgeräts verlagert wird. Eine bevorzugte Ausbildung sieht in diesem Zusammenhang vor, dass der Behälterverschluss im Bereich der Einlassöffnung einen vorstehenden Dorn umfasst, der das Betätigungsglied des Handgeräteventils beim Ansetzen des abgabeseitigen Endes des Handgeräts an die Einlassöffnung verschiebt und das Ventil öffnet.

Die Erfindung wird nachfolgend anhand von in der Zeichnung schematischen dargestellten Ausführungsbeispielen näher erläutert. In dieser zeigen
Fig. 1 eine Schnittansicht eines einen Gasvorratsbehälter enthaltenden Handgeräts,
Fig. 2 eine Schnittansicht einer Ausbildung einer erfindungsgemäßen Flaschenverschlusseinheit in einer auseinandergezogenen Darstellung,
Fig. 3 eine Schnittansicht der Flaschenverschlusseinheit gemäß Fig. 2 in in einen Flaschenhals eingesetztem Zustand,
Fig. 4 eine Schnittansicht einer nicht beanspruchten Ausbildung einer Flaschenverschlusseinheit in in einen Flaschenhals eingesetztem Zustand, und
Fig. 5 eine Schnittansicht der Flaschenverschlusseinheit gemäß Fig. 2 in betätigtem Zustand mit angesetztem Handgerät.

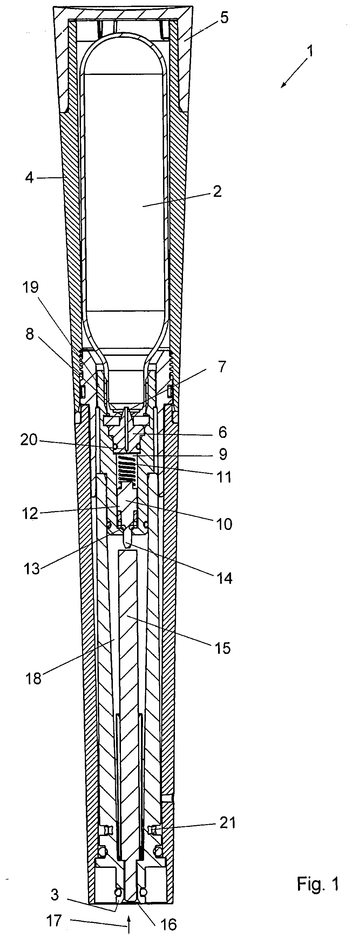

Fig. 1 zeigt ein Handgerät 1, das der Aufnahme eines Schutzgasvorratsbehälters 2 und der gesteuerten Abgabe des Schutzgases über eine Abgabeöffnung 3 dient. Das Handgerät 1 weist ein Gehäuse 4 auf, das rückseitig durch eine Kappe 5 verschlossen ist. Im abgenommenen Zustand des Gehäuses 4 inkl. Kappe 5 kann ein Schutzgasvorratsbehälter 2, wie beispielsweise eine Gaskartusche in die Schutzgasvorratsbehälteraufnahme 19 eingesetzt werden. Das Handgerät 1 weist weiters ein Aufstechelement 6 auf, das eine in Richtung des Gasvorratsbehälters 2 vorstehende Hohlnadel 7 aufweist, die geeignet ist, eine Dichtkappe 8 des Gasvorratsbehälters 2 aufzustechen. Im aufgestochenen Zustand steht der Innenraum des Gasvorratsbehälters 2 über die Hohlnadel 7 mit dem Ventilraum 9 eines Ventils 10 in Verbindung. Das Ventil 10 weist ein in axialer Richtung gegen die Kraft einer Feder 11 verschiebbares Ventilglied 12 auf, dessen Dichtfläche im geschlossenen Zustand des Ventils gegen einen an einem Bauteil 13 ausgebildeten Ventilsitz anliegt. Das Ventilschließglied 12 weist einen Fortsatz 14 auf, der eine mit einem Betätigungsstift 15 zusammenwirkende Anschlagfläche aufweist. Der Betätigungsstift 15 erstreckt sich bis zur Abgabeöffnung 3 und stellt dort eine Anschlagsfläche 16 zur Verfügung, die durch einen in der Folge noch näher erläuterten Dorn an dem Behälterverschluss zusammenwirkt. Beim Ansetzen des Handgeräts 1 auf die Einlassöffnung des Behälterverschlusses wird der Betätigungsstift 15 in Richtung des Pfeils 17 nach hinten verschoben und betätigt über den Fortsatz 14 das Ventilschließglied 12, wodurch der Gasstrom aus dem Schutzgasvorratsbehälter 2 über die Hohlnadel 7, durch die Düse 20, den Ventilraum 9, den geöffneten Ventilsitz am Bauteil 13, die Strömungskammer 18 und die Abgabeöffnung 3 freigegeben wird. Wie bereits erwähnt, strömt das Gas im Anschluss an die Hohlnadel 7 durch eine Düse 20, dessen Strömungsquerschnitt sich in Strömungsrichtung verringert, sodass der Volumenstrom des Gases entsprechend verringert werden kann. Das Überdruckventil 21 schützt den mit dem Schutzgas zu befüllenden Behälter dabei vor zu hohem Druck.

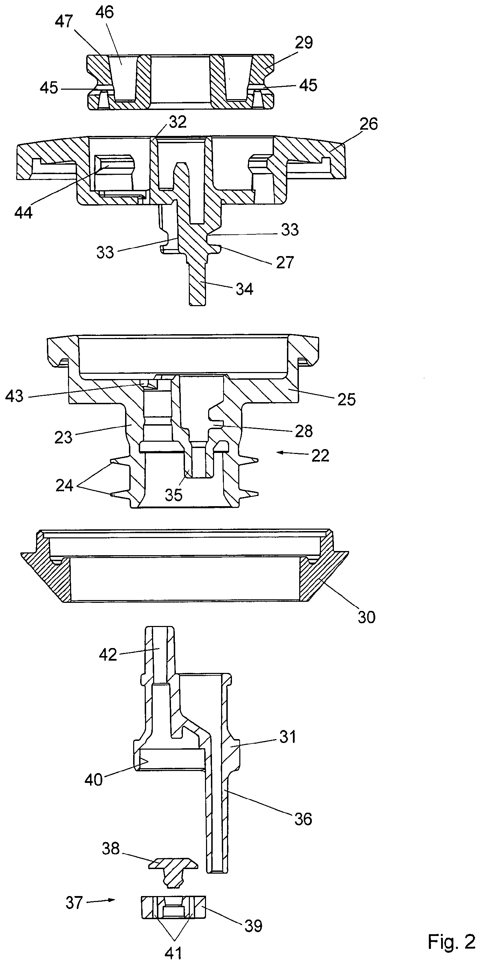

Fig. 2 zeigt den erfindungsgemäßen Verschluss, über welchen das vom Handgerät 1 abgegebene Schutzgas in den verschlossenen Behälter eingebracht wird. Der Verschluss weist hierbei einen Stopfen 22 auf, der im Wesentlichen von einem Stopfengrundkörper 23 gebildet ist, an dessen Umfang zwei umlaufende Dichtlippen 24 ausgebildet sind. Die Dichtlippen 24 wirken hierbei im in einen Flaschenhals eingreifenden Zustand mit der Innenwand des Flaschenhalses zusammen, um den Verschluss entsprechend abzudichten. Der Stopfengrundkörper 23 weist einen vom Stopfen 22 ausgehenden ringförmigen, flanschartigen Fortsatz 25 auf, der den Rand der Flaschenöffnung überdeckt und damit einen Teil der Verschlusskappe ausbildet. Der Stopfengrundkörper 23 besteht hierbei aus einem elastomeren Werkstoff.

Der Flaschenverschluss umfasst weiters einen aus Kunststoff oder einem anderen harten Material bestehenden Kappenteil 26, der in den Stopfengrundkörper 23 eingesetzt bzw. eingesteckt werden kann, wobei die erforderliche Haltekraft dadurch sichergestellt ist, dass der Fortsatz 27 in eine entsprechende Ausnehmung 28 des Stopfengrundkörpers 23 eingreift. Der Verschluss weist weiters einen in den Kappenteil 26 einsetzbaren Abschlussring 29, einen Gegenring 30 sowie eine kombinierte Ein- und Auslasseinheit 31 auf, welche in den Stopfengrundkörper 23 einsetz- bzw. einsteckbar ist.

Der in Fig. 2 dargestellte Verschluss weist einen Einlass- und einen Auslasskanal mit jeweils zugeordnetem Einlass- bzw. Auslassventil auf. Der Einlasskanal samt Einlassventil dient dazu, das vom Handgerät 1 abgegebene Schutzgas durch den Verschluss hindurch in den Behälter, insbesondere die Flasche, zu leiten.

Der Auslasskanal samt Auslassventil dient dazu, die im Behälter, insbesondere der Flasche, vorhandene Luft austreten zu lassen, sofern ein Spülen des Behälters gewünscht ist. Die Einlassöffnung des Verschlusses ist am Kappenteil 26 ausgebildet und mit 32 bezeichnet. Schutzgas, das über die Einlassöffnung 32 eingebracht wird, strömt in der Folge über strichliert dargestellte Bohrungen 33, die am Umfang eines Dorns 34 münden. Im in den Stopfengrundkörper 23 eingesetzten Zustand des Kappenteils 26 wird der Dorn 34 von einem einstückig aus dem Stopfengrundkörper 23 ausgebildeten hülsenförmigen Dichtkörper 35 umgeben. Der Dichtkörper 35 dichtet hierbei die Mündungen der Bohrungen 33 ab. Sofern ein entsprechender Gasdruck an den Mündungen der Bohrungen 33 anliegt, wird der Dichtkörper 35 radial aufgeweitet und erlaubt einen Gasstrom durch einen ringförmigen Raum, der sich zwischen der Außenoberfläche des Dorns 34 und der Innenoberfläche des Dichtkörpers 35 ausbildet. Das Gas gelangt in der Folge in die kombinierte Ein- und Auslasseinheit 31 und strömt dort durch einen Endabschnitt 36 des Einlasskanals in das Innere des Behälters.

Sofern ein Spülen des Behälterinnenraums gewünscht ist, weist die kombinierte Ein- und Auslasseinheit 31 ein Auslassventil 37 auf, das eine flexible Dichtkappe 38 umfasst, die in einen buchsenförmigen Teil 39 eingesetzt ist. Der buchsenförmige Teil 39 wiederum ist im zusammengebauten Zustand in eine entsprechende Ausnehmung 40 der kombinierten Ein- und Auslasseinheit 31 eingesetzt. Der buchsenförmige Teil 39 weist zwei Bohrungen 41 auf, über die das aus dem Behälter entweichende Gas strömt, wobei die die Bohrungen 41 abdeckende Dichtkappe 38 bei entsprechendem Überdruck elastisch ausgelenkt wird, um den Gasstrom durch den Auslasskanal 42 freizugeben. Der Auslasskanal 42 mündet in einen im Stopfengrundkörper 23 ausgebildeten Verbindungskanal 43, der in eine im Kappenteil 26 ausgebildete Ringkammer 44 mündet. Die Ringkammer 44 wiederum ist über radiale Bohrungen 45 mit einer ringförmigen Auslasskammer 46 verbunden, die im Abschlussring 29 ausgebildet ist. Das Gas kann somit über die Auslasskammer 46 und die Auslassöffnung 47 ins Freie austreten.

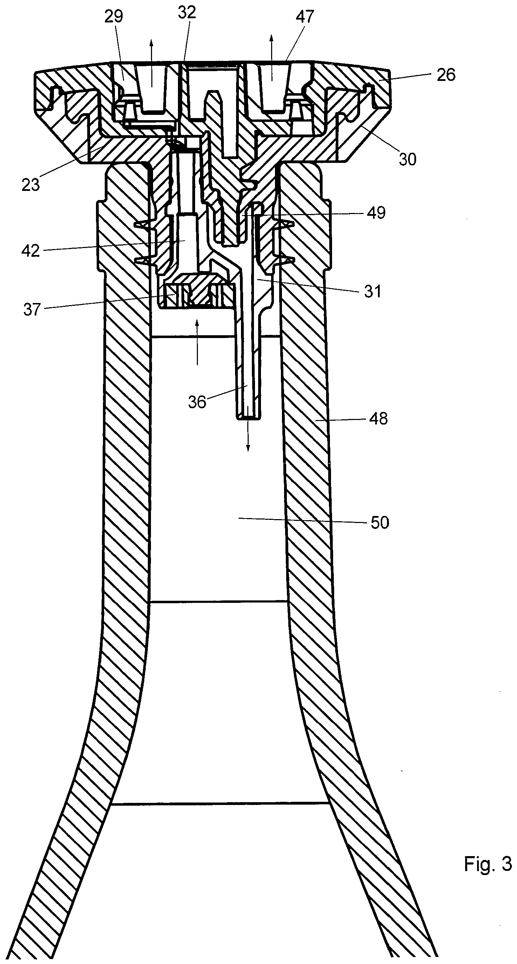

Fig. 3 zeigt den in Fig. 2 dargestellten Verschluss in zusammengebautem und in eine Flasche 48 eingesetzten Zustand. Sobald an der Einlassöffnung 32 ein entsprechender Gasdruck anliegt, öffnet sich das schematisch mit 49 bezeichnete Einlassventil, sodass das Gas über den Endabschnitt 36 des Einlasskanals in das Innere 50 der Flasche gelangt. Im Gasvolumen der teilbefüllten Flasche 48 baut sich ein entsprechender Gasdruck auf, bis das Auslassventil 37 geöffnet wird und der entsprechende Überdruck über den Auslasskanal 42 und die Auslassöffnung 47 entweichen kann. Der Endabschnitt 36 des Einlasskanals ist hierbei exzentrisch angeordnet und ragt vom Stopfen 22 vor, sodass im Inneren 50 der Flasche 48 eine zirkuläre Strömung entsteht, die das Spülen des Gasvolumens begünstigt. Das Entweichen des Gases aus dem Inneren 50 der Flasche 48 erfolgt ebenfalls exzentrisch, und zwar über das zum Einlasskanal 36 diametral angeordnete Auslassventil 37. Auf diese Art und Weise kann ein Spülen des Gasvolumens, d.h. ein Entweichen der im Inneren 50 der Flasche 48 vorhandenen Luft ermöglicht werden. Gleichzeitig wird aufgrund der Auslegung des Auslassventils 37 ein Überdruck im Inneren 50 der Flasche 48 aufrechterhalten.

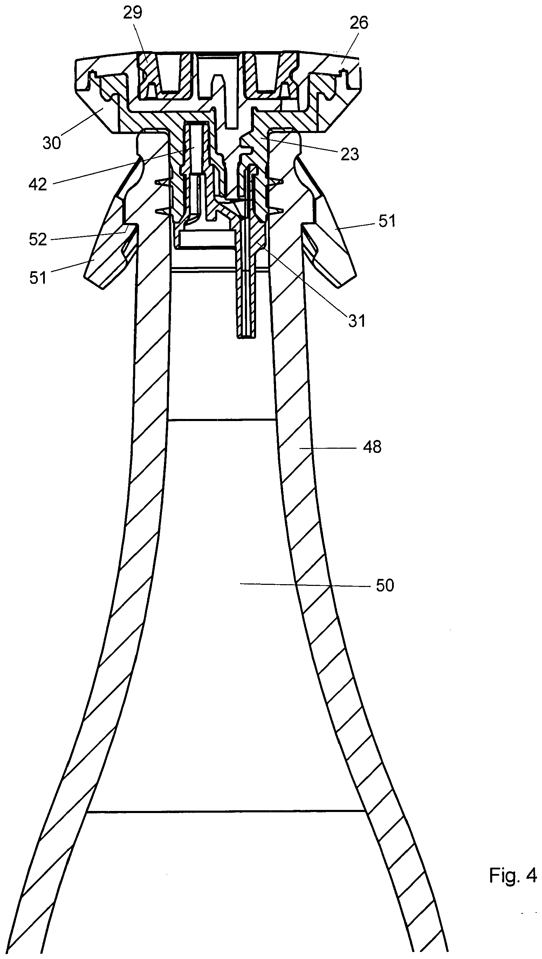

In Fig. 4 ist eine nicht beanspruchte Ausbildung eines Flaschenverschlusses dargestellt, in der kein Auslasskanal und dementsprechend kein Auslassventil vorgesehen ist. Der Flaschenverschluss ist insbesondere für kohlensäurehältige Getränke, wie beispielsweise Champagner geeignet, bei denen in erster Linie ein Überdruck im Flascheninneren 50 herbeigeführt werden soll. Abweichend von der Abbildung gemäß den Fig. 2 und 3 weist der Flaschenverschluss nun zwei schwenkbar angeordnete Haltebügel 51 auf, die ausgebildet sind, um einen umlaufenden Absatz 52 am Flaschenhals zu hintergreifen. Abweichend von der Ausbildung gemäß den Fig. 2 und 3 ist der Stopfengrundkörper 23 nicht mit einem Verbindungskanal 43 ausgebildet, sodass ein Entweichen von Gas aus dem Inneren 50 der Flasche 48 über den Auslasskanal 42 nicht möglich ist.

Bei einer weiteren, nicht dargestellten und nicht beanspruchten Abwandlung eines Verschlusses kann zwar ein Auslasskanal 42, jedoch kein Auslassventil 37 vorgesehen sein. Bei einer derartigen Ausbildung ist ein Spülen des Gasvolumens der Flasche 48 möglich. Der Aufbau eines Überdrucks im Inneren 50 der Flasche 48 ist jedoch nicht vorgesehen.

Als Schutzgas, das in das Flascheninnere eingefüllt wird, ist beispielsweise ein Inertgas, wie beispielsweise Argon, und/oder CO₂ vorgesehen. Bevorzugt sind Gase, die schwerer als Luft sind, sodass sich das Schutzgas auf die Oberfläche der in der Flasche 48 vorhandenen Flüssigkeit legt, sodass Oxidationsvorgänge unterbunden werden. Weiters führt die Verwendung eines Schutzgases, das schwerer ist als Luft, auch bei einer Ausbildung mit einem Auslasskanal, aber ohne Auslassventil dazu, dass das Schutzgas in der Flasche verbleibt.

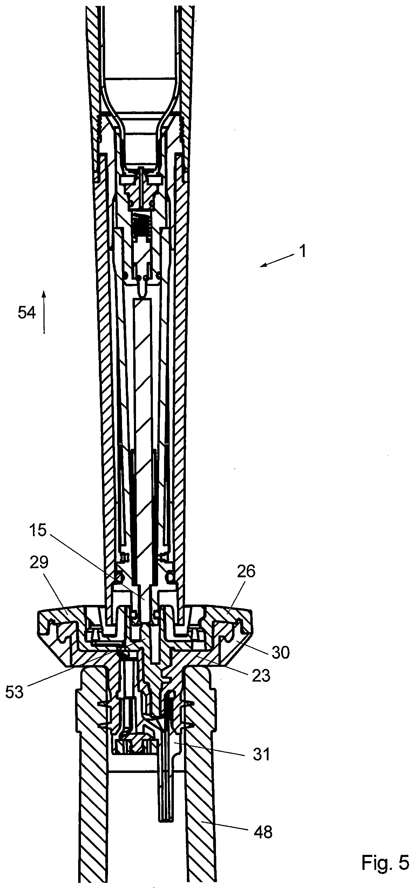

In Fig. 5 ist das Handgerät 1 in an die Einlassöffnung 32 des Flaschenverschlusses angesetzter Position dargestellt. Der Flaschenverschluss ist in der Ausbildung gemäß den Fig. 2 und 3 dargestellt, wobei das in Fig.5 dargestellte Zusammenwirken des Handgeräts 1 mit der Einlassöffnung 32 des Verschlusses in gleicher Weise auch für die abgewandelte Ausbildung des Flaschenverschlusses gemäß der Fig. 4 oder der weiteren abgewandelten Ausbildung ohne Auslassventil gilt.

In Fig. 5 ist ersichtlich, dass ein vorstehender Dorn 53, der im Bereich der Einlassöffnung 32 angeordnet ist, den Betätigungsstift 15 des Handgeräts 1 beim Ansetzen des Handgeräts 1 in Richtung des Pfeils 54 nach hinten verschiebt, wodurch das Ventil 10 des Handgeräts 1 geöffnet wird und der Gasfluss aus dem Schutzgasvorratsbehälter 2 freigegeben wird.

## Patentansprüche

1. Verschlusselement für Flüssigkeitsbehälter, insbesondere Flaschen, umfassend einen in die Halsöffnung des Flüssigkeitsbehälters greifenden Stopfen (22) und eine den Rand der Halsöffnung überdeckende Kappe (26), wobei der Stopfen einen diesen durchsetzenden Einlasskanal und einen Auslasskanal aufweist, wobei der Einlasskanal und der Auslasskanal (42) mit einem Einlass- bzw. Auslassventil (49, 37) versehen ist, das als Überdruckventil (21) ausgebildet ist, **dadurch gekennzeichnet, dass** der Stopfen (22) einen Stopfengrundkörper (23) aus einem Elastomer umfasst, der an seinem Außenumfang wenigstens eine Dichtlippe (24) aufweist und der ein durch den anliegenden Überdruck auslenkbaren Dichtkörper (35) des Einlassventils (49) ausbildet.

2. Verschlusselement nach Anspruch 1, **dadurch gekennzeichnet, dass** das Einlass- und das Auslassventil (49, 37) voneinander unabhängig betätigbar sind.

3. Verschlusselement nach Anspruch 1 oder 2, **dadurch gekennzeichnet, dass** der Dichtkörper (35) als durch den anliegenden Überdruck radial aufweitbare Hülse ausgebildet ist.

4. Verschlusselement nach einem der Ansprüche 1 bis 3, **dadurch gekennzeichnet, dass** der Einlasskanal exzentrisch in die Behälteröffnung, insbesondere den Flaschenhals mündet.

5. Verschlusselement nach einem der Ansprüche 1 bis 4, **dadurch gekennzeichnet, dass** der Einlasskanal einen vom Stopfen (22) vorragenden, exzentrisch angeordneten Endabschnitt (36) aufweist.

6. Verschlusselement nach einem der Ansprüche 1 bis 5, **dadurch gekennzeichnet, dass** die Kappe (26) eine im Wesentlichen zentrische, mit dem Einlasskanal in Verbindung stehende Einlassöffnung (32) zum Ansetzen oder Anschließen einer Schutzgasquelle aufweist.

7. Verschlusselement nach Anspruch 6, **dadurch gekennzeichnet, dass** die Kappe (26) eine radial außerhalb der Einlassöffnung (32) angeordnete, bevorzugt ringförmige Auslassöffnung (47) aufweist, die mit dem Auslasskanal (42) in Verbindung steht.

8. Verschlusselement nach Anspruch 7, **dadurch gekennzeichnet, dass** der Auslasskanal (42) über wenigstens eine radiale Bohrung (45) in eine Auslasskammer (46) mündet, die über die Auslassöffnung (47) mit der Umgebung in Verbindung steht.

9. Verschlusselement nach Anspruch 7 oder 8, **dadurch gekennzeichnet, dass** die Einlass- und ggf. die Auslassöffnung (32, 47) in einem Kappengrundkörper ausgebildet sind, der mit dem Stopfen (22), insbesondere dem Stopfengrundkörper (23) verbunden, insbesondere in diesen gesteckt ist.

10. Verschlusselement nach einem der Ansprüche 1 bis 9, **dadurch gekennzeichnet, dass** wenigstens ein Abschnitt des Auslasskanals (42) in einem in eine Ausnehmung des Stopfens (22), insbesondere des Stopfengrundkörpers, eingesetzten, insbesondere eingesteckten Einsatzteil ausgebildet ist.

11. Verschlusselement nach Anspruch 10, **dadurch gekennzeichnet, dass** der Einsatzteil den vorragenden Endabschnitt des Einlasskanals ausbildet.

12. Verschlusselement nach Anspruch 10 oder 11, **dadurch gekennzeichnet, dass** der Einsatzteil ein Auslassventil (37) aufweist.

13. Verschlusselement nach einem der Ansprüche 1 bis 12, **dadurch gekennzeichnet, dass** die Einströmöffnung des Auslasskanals (42) exzentrisch angeordnet ist, insbesondere diametral zur exzentrischen Mündung des Einlasskanals.

14. Verschlusselement nach einem der Ansprüche 1 bis 13, **dadurch gekennzeichnet, dass** an der Kappe (5) zwei Haltebügel (51) schwenkbar befestigt sind.

15. Vorrichtung zum Konservieren von Flüssigkeiten im Haushalt mit Hilfe eines Schutzgases, umfassend wenigstens ein mit einem Gasvorratsbehälter (2) verbindbares oder diesen aufweisendes Handgerät (1), das ein eigenes, das Schutzgas wahlweise freigebendes oder zurückhaltendes Ventil (10) aufweist, um die Abgabe des Schutzgases aus einem abgabeseitigen Ende des Handgeräts (1) freizugeben oder zurückzuhalten, sowie ggf. eine Düse (20), die den Gasstrom regelt und weiters umfassend einen Behälterverschluss nach einem der Ansprüche 1 bis 14.

16. Vorrichtung nach Anspruch 15, **dadurch gekennzeichnet, dass** das Ventil (10) des Handgeräts (1) ein Betätigungsglied aufweist, das als gegen die Kraft einer Feder (11) verschiebbares Ventilglied (12) ausgebildet ist oder mit diesem zusammenwirkt.

17. Vorrichtung nach Anspruch 15 oder 16, **dadurch gekennzeichnet, dass** der Behälterverschluss im Bereich der Einlassöffnung (32) einen vorstehenden Dorn (34) umfasst, der das Betätigungsglied des Handgeräteventils beim Ansetzen des abgabeseitigen Endes des Handgeräts (1) an die Einlassöffnung (32) verschiebt und das Ventil (10) öffnet.

18. Vorrichtung nach einem der Ansprüche 15 bis 17, **dadurch gekennzeichnet, dass** sich das Einlass- und Auslassventil (49, 37) des Verschlusssystems sowie das Handgeräteventil beim Entfernen des Handgeräts (1) selbsttätig verschließen.

## Claims

1. A closure element for liquid containers, in particular bottles, comprising a stopper engaging the neck opening of the liquid container and a cap (26) covering the edge of the neck opening, said stopper comprising an inlet channel passing therethrough and an outlet channel, wherein the inlet channel and the outlet channel (42) are respectively provided with an inlet valve or outlet valve (49, 37) designed as a pressure relief valve (21), **characterized in that** the stopper (22) comprises a stopper base body (23) made of an elastomer, which has at least one sealing lip (24) on its outer circumference and forms a sealing body (35) of the inlet valve (49, 37), which is deflectable by the applied overpressure.

2. A closure element according to claim 1, **characterized in that** the inlet valve and the outlet valve (49, 37) are operable independently of each other.

3. A closure element according to claim 1 or 2, **characterized in that** the sealing body (35) is designed as a sleeve that is radially expandable by the applied overpressure.

4. A closure element according to any one of claims 1 to 3, **characterized in that** the inlet channel opens eccentrically into the container opening, in particular into the neck of the bottle.

5. A closure element according to any one of claims 1 to 4, **characterized in that** the inlet channel comprises an eccentrically disposed end portion (36) protruding from the stopper (22).

6. A closure element according to any one of claims 1 to 5, **characterized in that** the cap (26) comprises a substantially central inlet opening (32) in connection with the inlet channel for attaching or connecting a protective gas source.

7. A closure element according to claim 6, **characterized in that** the cap (26) comprises a preferably annular outlet opening (47) located radially outside the inlet opening (32) and communicating with the outlet channel (42).

8. A closure element according to claim 7, **characterized in that** the outlet channel (42), via at least one radial bore (45), opens into an outlet chamber (46) communicating with the environment via the outlet opening (47).

9. A closure element according to claim 7 or 8, **characterized in that** the inlet opening and optionally the outlet opening (32, 47) are formed in a cap base body connected to, in particular plugged into, the stopper (22), in particular the stopper base body (23).

10. A closure element according to any one of claims 1 to 9, **characterized in that** at least one portion of the outlet channel (42) is formed in an insert inserted in, in particular plugged into, a recess of the stopper (22), in particular of the stopper base body.

11. A closure element according to claim 10, **characterized in that** the insert forms the protruding end portion of the inlet channel.

12. A closure element according to claim 10 or 11, **characterized in that** the insert comprises an outlet valve (37).

13. A closure element according to any one of claims 1 to 12, **characterized in that** the inflow opening of the outlet channel (42) is disposed eccentrically, in particular diametrically to the eccentric mouth of the inlet channel.

14. A closure element according to any one of claims 1 to 13, **characterized in that** two retaining clamps (51) are pivotally fastened to the cap (26).

15. A device for preserving liquids in the household with the aid of a protective gas, comprising at least one handheld device (1) connectable to, or comprising, a gas reservoir (2) and having its own valve (10) alternatively releasing or retaining the protective gas in order to respectively release or retain the discharge of the protective gas from a discharge-side end of the handheld device. (1), and optionally a nozzle (20) controlling the gas flow, and further comprising a container closure according to any one of claims 1 to 14.

16. A device according to claim 15, **characterized in that** the valve (10) of the handheld device (1) comprises an actuating member designed as a valve member (12) displaceable against the force of a spring (11) or cooperating therewith.

17. A device according to claim 15 or 16, **characterized in that** the container closure comprises a protruding mandrel (34) in the region of the inlet opening (32), which displaces the actuating member of the valve of the handheld device when placing the discharge-side end of the handheld device (1) to the inlet opening (32), and opens the valve (10).

18. A device according to any one of claims 15 to 17, **characterized in that** the inlet valve and the outlet valve (49, 37) of the closure system, and the valve of the handheld device, close automatically when removing the handheld device (1).

## Revendications

1. Élément de fermeture pour récipients de liquide, en particulier bouteilles, comprenant un bouchon (22) entrant en prise dans l'ouverture de goulot du récipient de liquide et un capuchon (26) recouvrant le bord de l'ouverture de goulot,
dans lequel le bouchon présente un canal d'entrée le traversant et un canal de sortie,
dans lequel le canal d'entrée et le canal de sortie (42) sont dotés d'une soupape d'entrée ou de sortie (49, 37), qui est réalisée en tant que soupape de surpression (21), **caractérisé en ce que** le bouchon (22) comprend un corps de base de bouchon (23) en un élastomère, qui présente au moins une lèvre d'étanchéité (24) au niveau de sa circonférence extérieure et qui forme un corps d'étanchéité (35) de la soupape d'entrée (49) pouvant être dévié par la surpression appliquée.

2. Élément de fermeture selon la revendication 1, **caractérisé en ce que** la soupape d'entrée et de sortie (49, 37) peuvent être actionnées indépendamment l'une de l'autre.

3. Élément de fermeture selon la revendication 1 ou 2, **caractérisé en ce que** le corps d'étanchéité (35) est réalisé en tant que douille pouvant être élargie radialement par la surpression appliquée.

4. Élément de fermeture selon l'une quelconque des revendications 1 à 3, **caractérisé en ce que** le canal d'entrée débouche de manière excentrique dans l'ouverture de récipient, en particulier le goulot de bouteille.

5. Élément de fermeture selon l'une quelconque des revendications 1 à 4, **caractérisé en ce que** le canal d'entrée présente une section d'extrémité (36) agencée de manière excentrique, faisant saillie du bouchon (22).

6. Élément de fermeture selon l'une quelconque des revendications 1 à 5, **caractérisé en ce que** le capuchon (26) présente une ouverture d'entrée (32) sensiblement centrée, en liaison avec le canal d'entrée pour l'application ou le raccordement d'une source de gaz de protection.

7. Élément de fermeture selon la revendication 6, **caractérisé en ce que** le capuchon (26) présente une ouverture de sortie (47), de préférence annulaire, agencée radialement à l'extérieur de l'ouverture d'entrée (32), qui est en liaison avec le canal de sortie (42).

8. Élément de fermeture selon la revendication 7, **caractérisé en ce que** le canal de sortie (42) débouche dans une chambre de sortie (46) par le biais d'au moins un perçage radial (45), qui est en liaison avec l'environnement par le biais de l'ouverture de sortie (47).

9. Élément de fermeture selon la revendication 7 ou 8, **caractérisé en ce que** l'ouverture d'entrée et le cas échéant l'ouverture de sortie (32, 47) sont réalisées dans un corps de base de capuchon, qui est relié au bouchon (22), en particulier au corps de base de bouchon (23), en particulier enfiché dans celui-ci.

10. Élément de fermeture selon l'une quelconque des revendications 1 à 9, **caractérisé en ce qu'**au moins une section du canal de sortie (42) est réalisée dans un insert inséré, en particulier enfiché, dans un évidement du bouchon (22), en particulier du corps de base de bouchon.

11. Élément de fermeture selon la revendication 10, **caractérisé en ce que** l'insert forme la section d'extrémité en saillie du canal d'entrée.

12. Élément de fermeture selon la revendication 10 ou 11, **caractérisé en ce que** l'insert présente une soupape de sortie (37).

13. Élément de fermeture selon l'une quelconque des revendications 1 à 12, **caractérisé en ce que** l'ouverture d'admission du canal de sortie (42) est agencée excentriquement, en particulier diamétralement à l'embouchure excentrique du canal d'entrée.

14. Élément de fermeture selon l'une quelconque des revendications 1 à 13, **caractérisé en ce que** deux étriers de retenue (51) sont fixés de manière pivotante au niveau du capuchon (26).

15. Dispositif de conservation de liquides au sein du ménage à l'aide d'un gaz de protection, comprenant au moins un appareil portable (1) pouvant être relié à un réservoir de gaz (2) ou présentant celui-ci, qui présente une propre soupape (10) libérant ou retenant au choix le gaz de protection pour libérer ou retenir la distribution du gaz de protection d'une extrémité côté distribution de l'appareil portable (1), ainsi que le cas échéant une buse (20), qui régule le courant de gaz et comprenant en outre une fermeture de récipient selon l'une quelconque des revendications 1 à 14.

16. Dispositif selon la revendication 15, **caractérisé en ce que** la soupape (10) de l'appareil portable (1) présente un organe d'actionnement, qui est réalisé en tant qu'organe de soupape (12) déplaçable contre la force d'un ressort (11) ou coopère avec celui-ci.

17. Dispositif selon la revendication 15 ou 16, **caractérisé en ce que** la fermeture de récipient comprend dans la zone de l'ouverture d'entrée (32) un mandrin en saillie (34), qui déplace l'organe d'actionnement de la soupape d'appareil portable lors de l'application de l'extrémité côté distribution de l'appareil portable (1) sur l'ouverture d'entrée (32) et ouvre la soupape (10).

18. Dispositif selon l'une quelconque des revendications 15 à 17, **caractérisé en ce que** la soupape d'entrée et de sortie (49, 37) du système de fermeture ainsi que la soupape d'appareil portable se ferment automatiquement lors du retrait de l'appareil portable (1).
